# EUROPÄISCHE PATENTSCHRIFT

(11) **EP 3 119 732 B1**
(45) Veröffentlichungstag und Bekanntmachung des Hinweises auf die Patenterteilung: **25.04.2018**
(21) Anmeldenummer: 15705787.8
(22) Anmeldetag: 09.02.2015
(51) Int. Cl.: C04B 35/56, C04B 35/565, C04B 35/584, C04B 35/80, F16C 33/00, F16J 15/34, C04B 111/00, C04B 41/85

(54) **GLEITRINGDICHTUNGSANORDNUNG ENTHALTEND EINEN GRAPHENHALTIGEN GLEITRING**
MECHANICAL SEAL ARRANGEMENT COMPRISING A SLIP RING CONTAINING GRAPHENE
JOINT MÉCANIQUE D'ÉTANCHÉITÉ COMPRENANT UN ANNEAU DE GLISSEMENT CONTENANT DU GRAPHÈNE

(30) Priorität: 21.03.2014 DE 102014205297
(43) Veröffentlichungstag der Anmeldung: 25.01.2017
(73) Patentinhaber: EagleBurgmann Germany GmbH & Co. KG, 82515 Wolfratshausen (DE)
(72) Erfinder: OTSCHIK, Joachim, 82547 Beuerberg (DE); THELKE, Jörg, 82515 Wolfratshausen (DE)
(74) Vertreter: Hoefer & Partner Patentanwälte mbB
(86) Internationale Anmeldenummer: PCT/EP2015/052592
(87) Internationale Veröffentlichungsnummer: WO 2015/139881

(56) Entgegenhaltungen:
- EP-A1- 2 916 048
- WO-A2-2013/091617
- DE-A1-102011 116 162
- DE-U1- 20 212 848
- US-A1- 2011 253 924
- US-A1- 2013 184 143
- US-A1- 2014 031 475
- LENKA KVETKOV ET AL: "Fracture toughness and toughening mechanisms in graphene platelet reinforced SiNcomposites", SCRIPTA MATERIALIA, ELSEVIER, AMSTERDAM, NL, vol. 66, no. 10, 7 February 2012 (2012-02-07), pages 793-796, XP028473685, ISSN: 1359-6462, DOI: 10.1016/J.SCRIPTAMAT.2012.02.009 [retrieved on 2012-02-13]

## Beschreibung

Die vorliegende Erfindung betrifft einen graphenhaltigen Gleitring sowie eine Gleitringdichtungsanordnung mit einem derartigen Gleitring.
Graphen ist eine Modifikation des Kohlenstoffs in zweidimensionaler Struktur, wobei jedes Kohlenstoffatom von drei weiteren Kohlenstoffatomen umgeben ist. Hierdurch ergibt sich ein bienenwabenförmiges (hexagonales) Muster. Ferner sind grundsätzlich Gleitringdichtungen mit einem rotierenden und einem stationären Gleitring bekannt, welche eine Abdichtung an rotierenden Bauteilen ermöglichen. Ein Werkstoff für Gleitringe ist dabei Siliziumkarbid (SiC) oder Wolframkarbid (WC). Diese Werkstoffe eignen sich besonders gut für Gleitringe, da sie hohe Abriebfestigkeiten mit relativ großer Wärmeleitfähigkeit kombinieren. Weiterhin ist aus der DE 102011056896 A1 ein Verfahren zur Herstellung und Verwendung von Graphen auf polykristallinem Siliziumkarbid für Lagerbauteile bekannt. Hierbei wird Graphen auf eine Oberfläche des Siliziumkarbids aufgebracht, um Oberflächen mit sehr geringer Reibung zu schaffen. Nach dem Polieren der Siliziumkarbidoberfläche erfolgt dabei eine Glühbehandlung mit fließendem Argon. Grundsätzlich haben sich die bekannten Gleitringe aus Siliziumkarbid bewährt. Aufgrund steigender Anforderungen hinsichtlich Drehzahlen von Maschinen und Temperaturen wäre es jedoch auch wünschenswert, bei Gleitringen Steigerungen der Lebensdauer zu erreichen.

Aus der DE 10 2011 116 162 A1 ist ferner ein Gleitring einer Gleitringdichtung bekannt, welcher aus Si₃N₄ hergestellt ist und an beiden Seiten eine Beschichtung aufweist.

Die US 2013/0184143 A1 offenbart einen graphenverstärkten Keramikverbund.

Die Veröffentlichung Lenka Kvetkovä et al: "Fracture toughness and toughening mechanisms in graphene platelet reinforced Si3N4 composites", SCRIPTA MATERIALIA, ELSEVIER, Bd. 66, Nr. 10, 7. Februar 2012, Seiten 793-796, XP028473685, offenbart ein mit Graphenblättchen verstärktes Si₃N₄-Komposit.

Die DE 202 12 848 U1 offenbart eine Gleitringdichtungsanordnung mit einem Gleitring, welchem eine Graphit-Komponente hinzugefügt ist.

Es ist daher Aufgabe der vorliegenden Erfindung, eine Gleitringdichtungsanordnung bereitzustellen, welche bei einfachem Aufbau und einfacher, kostengünstiger Herstellbarkeit ein verbessertes thermisches Verhalten und eine längere Lebensdauer aufweist.

Diese Aufgabe wird durch eine Gleitringdichtungsanordnung mit den Merkmalen des Anspruchs 1 gelöst. Die Unteransprüche zeigen bevorzugte Weiterbildungen der Erfindung.

Die erfindungsgemäße Gleitringdichtungsanordnung mit den Merkmalen des Anspruchs 1 weist einen Gleitring auf, der aus einem Material hergestellt ist, welches ein Gleitringmaterial (Grundmaterial) und ein graphenhaltiges Material umfasst. Das graphenhaltige Material bildet mit dem Gleitringmaterial einen Verbundwerkstoff, in welchem das Gleitringmaterial und das graphenhaltige Material vermischt sind. Das Gleitringmaterial ist hierbei ein keramischer Werkstoff. Der Gleitring umfasst ausschließlich den keramischen Werkstoff und das graphenhaltige Material. Durch das Einbringen des graphenhaltigen Materials in das Material für den Gleitring kann somit eine verbesserte Wärmeleitfähigkeit wie auch eine verbesserte elektrische Leitfähigkeit erreicht werden. Weiterhin ergeben sich verbesserte mechanische Eigenschaften, insbesondere hinsichtlich einer Risszähigkeit, welche erheblich gesteigert werden kann. Ein Wachstum von Rissen, welche bei keramischen Werkstoffen von Gleitringen im Betrieb auftreten können, wird dabei durch das graphenhaltige Material um einen Faktor 2 bis 3 verbessert, d.h., ein Risswachstum entsprechend verlangsamt. Die zweidimensionale Struktur des graphenhaltigen Materials im Gleitring ermöglicht dabei, dass Risse abgelenkt, verzweigt oder überbrückt werden. Hierdurch kann insbesondere eine Lebensdauer des Gleitrings signifikant verbessert werden.

Das graphenhaltige Material ist bevorzugt Graphen in Form von reinem Graphen und/oder Graphenoxid und/oder technisch reduziertes Graphenoxid (TRGO) und/oder funktionales Graphen (Graphen mit angehängten weiteren Molekülen oder weiteren angehängten Atomen).

Weiter bevorzugt sind im Verbundwerkstoff der keramische Werkstoff und das graphenhaltige Material vermischt.

Der keramische Werkstoff ist besonders bevorzugt SiC oder WC oder Siliziumnitrid (Si₃N₄). Besonders bevorzugt sind der keramische Werkstoff und das graphenhaltige Material im Gleitring gleich verteilt. Hierdurch wird erreicht, dass über den gesamten Gleitring gleiche mechanische und thermische sowie elektrische Eigenschaften sichergestellt sind.

Besonders bevorzugt ist der Gleitring ein Sinterbauteil. Vorzugsweise wird hierbei zuerst der keramische Werkstoff in Pulverform mit dem graphenhaltigen Material vermischt und z.B. mittels eines Pressvorgangs in die gewünschte Form gebracht. Gegebenenfalls kann hierbei ein Bindemittel verwendet werden.

Besonders bevorzugt ist das Material für den Gleitring derart vorgesehen, dass ein Gewichtsanteil des graphenhaltigen Materials am Gesamtgewicht des Gleitrings in einem Bereich von 0,1 bis 10 Gew.%, insbesondere 1 bis 5 Gew.%, liegt.

Weiter bevorzugt ist der Anteil an Graphen im keramischen Werkstoff derart gewählt, dass der Gleitring einen spezifischen elektrischen Widerstand in einem Bereich von 0,1 bis 10 Ωm, insbesondere 0,3 bis 0,8 Ωm, aufweist.

Gemäß einer weiteren bevorzugten Ausgestaltung der vorliegenden Erfindung ist das graphenhaltige Material im Material des Gleitrings in Form von Graphenteilen derart angeordnet, dass jedes Graphenteil jeweils eine Vielzahl von einzelnen Graphenlagen aufweist, die unmittelbar parallel nebeneinander angeordnet sind. Die Anzahl der unmittelbar parallel nebeneinander angeordneten Graphenlagen ist dabei in einem Bereich von vorzugsweise 100 bis 1000 Lagen. Die Anzahl der Graphenlagen im Verbundwerkstoff kann dabei von Graphenteil zu Graphenteil unterschiedlich sein.

Weiter bevorzugt ist das Graphen im Material des Gleitrings derart angeordnet, dass der keramische Werkstoff einzelne Graphenbestandteile vollständig umschließt. Dadurch haben die im Material vorhandenen Graphenbestandteile zu benachbarten Graphenbestandteilen keinen direkten Kontakt. Die Graphenbestandteile können dabei einzelne Graphenlagen oder Graphenteile aus einer Vielzahl von Graphenlagen sein. Vorzugsweise ist das graphenhaltige Material derart im Material des Gleitrings vorgesehen, dass das graphenhaltige Material eine durch den Gleitring verlaufende durchgehende Verbindung von einer Gleitseite des Gleitrings zu wenigstens einer Rückseite, des Gleitrings bereitstellt. Hierdurch kann eine besonders gute thermische Leitung sowie auch eine besonders gute elektrische Leitung von der Gleitseite zur Außenseite des Gleitrings sichergestellt werden. Die Außenseite des Gleitringes kann dabei eine innere oder äußere Radialseite oder die Rückseite sein. Besonders bevorzugt ist dabei im Material des Gleitrings ein Graphennetz vorgesehen, welches durch einzelne, miteinander in Kontakt stehende Graphenbestandteile gebildet wird.

Weiter bevorzugt weist der Gleitring an der Gleitfläche eine Diamantbeschichtung auf. Hierdurch weist der Gleitring eine besonders gute Verschleißbeständigkeit auf. Die vorliegende Erfindung betrifft eine Gleitringdichtungsanordnung mit einem rotierenden und einem stationären Gleitring, wobei mindestens einer der Gleitringe ein graphenhaltiges Material umfasst. Vorzugsweise sind beide Gleitringe der Gleitringdichtungsanordnung aus graphenhaltigem Material hergestellt. Die Gleitringe weisen weiter bevorzugt keine Beschichtung oder alternativ eine Diamantbeschichtung auf.

Nachfolgend werden bevorzugte Ausführungsbeispiele der Erfindung unter Bezugnahme auf die begleitende Zeichnung im Detail beschrieben. Gleiche bzw. funktional gleiche Teile sind in der Zeichnung dabei jeweils mit den gleichen Bezugszeichen bezeichnet. In der Zeichnung ist:
- Fig. 1: eine schematische Schnittansicht einer Gleitringdichtungsanordnung gemäß einem ersten Ausführungsbeispiel der Erfindung;
- Fig. 2: eine schematische Schnittansicht des in Fig. 1 gezeigten Gleitrings; und
- Fig. 3: eine schematische Darstellung eines durch den Gleitring verlaufenden Risses, und
- Fig. 4: eine schematische Schnittansicht eines Gleitrings in einer Gleitringdichtungsanordnung gemäß einem zweiten Ausführungsbeispiel der Erfindung.

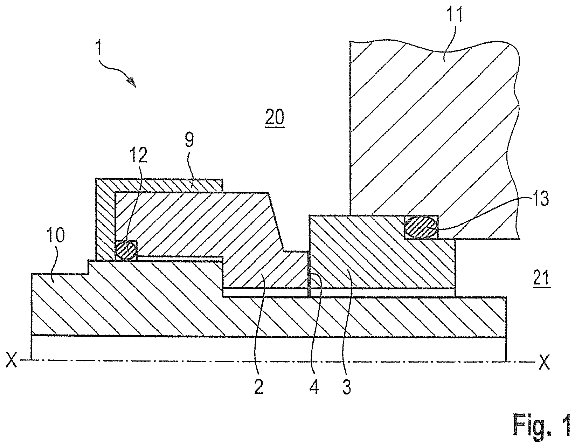

Fig. 1 zeigt schematisch eine Gleitringdichtungsanordnung 1 mit einem rotierenden Gleitring 2 und einem stationären Gleitring 3. Zwischen den beiden Gleitringen 2, 3 ist in bekannter Weise ein Dichtspalt 4 definiert. Der rotierende Gleitring 2 ist über ein Mitnahmeelement 9 mit einem rotierenden Bauteil 10, beispielsweise einer Wellenhülse oder dgl., verbunden. Die Bezugszeichen 12 und 13 bezeichnen O-Ringe. Der stationäre Gleitring 3 ist mit einem stationären Bauteil 11, wie z.B. einem Gehäuse o. dgl., verbunden.

Die Gleitringdichtungsanordnung 1 dichtet dabei einen Produktbereich 20 von einem Atmosphärenbereich 21 ab.

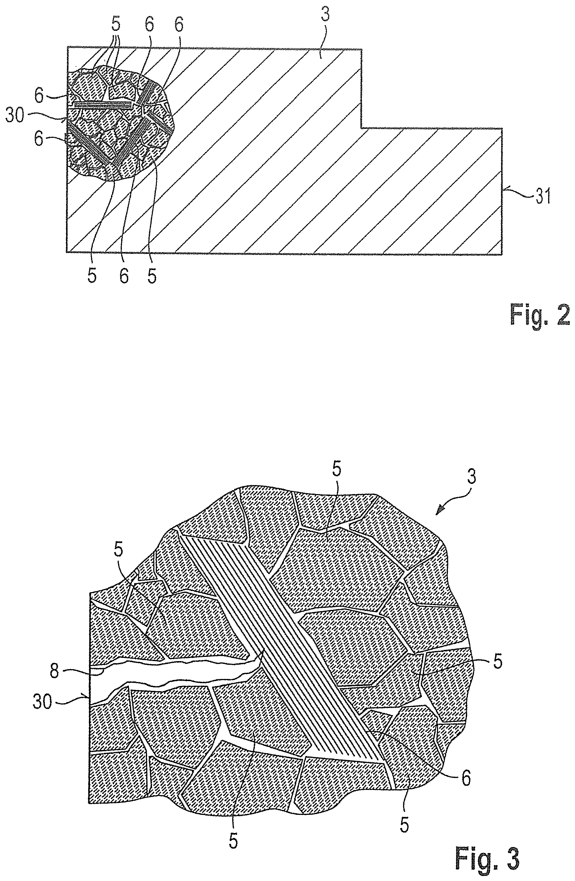

Der stationäre Gleitring 3 ist im Detail in Fig. 2 gezeigt. Der stationäre Gleitring 3 ist dabei aus einem Verbundwerkstoff hergestellt, welcher einen keramischen Werkstoff 5 und ein graphenhaltiges Material 6 umfasst. Das graphenhaltige Material 6 ist dabei im Verbundwerkstoff des Gleitrings gleich verteilt. Das graphenhaltige Material kann reines Graphen und/oder Graphenoxid und/oder technisch reduziertes Graphenoxid und/oder funktionales Graphen, bei dem wenigstens ein anderes chemisches Molekül angehängt ist, oder eine beliebige Kombination der vorhergehend genannten Materialien sein.

Wie in dem Ausschnitt von Fig. 2 dargestellt, ist das graphenhaltige Material 6 in Form einer Vielzahl von Graphenteilen im keramischen Werkstoff 5 angeordnet. Die Graphenteile umfassen dabei jeweils eine Vielzahl von Graphenlagen, welche parallel zueinander angeordnet sind. Die Anzahl der Graphenlagen pro Graphenteil liegt dabei zwischen 100 und 1000. Die einzelnen Graphenteile können sich dabei innerhalb des Verbundwerkstoffs berühren oder sie sind vollständig von Kristallen des keramischen Materials 5 umschlossen, so dass kein Kontakt zu benachbarten Graphenteilen besteht. Das keramische Material ist vorzugsweise SiC.

Der stationäre Gleitring 3 dieses Ausführungsbeispiels ist dabei ein Sinterbauteil, wobei zur Herstellung des Gleitrings in einem ersten Schritt ein keramisches Pulver mit dem graphenhaltigen Material gemischt wird, um ein Sinterpulver bereitzustellen. Hierbei wird graphenhaltiges Material in einem Bereich von 0,1 bis 10 Gew. % und insbesondere 1 bis 5 Gew.% des Gesamtgewichts des Sinterpulvers beigemischt. In einem nächsten Schritt wird ein Grünling aus dem Sinterpulvergemisch geformt, welcher anschließend gesintert wird.

Die Beimengung von graphenhaltigem Material zum keramischen Sinterwerkstoff ergibt überraschenderweise einen Gleitring aus einem Verbundwerkstoff, welcher bei gleichbleibender Festigkeit überraschende Vorteile aufweist. Neben einem deutlich verbesserten besonders niedrigen spezifischen elektrischen Widerstand von bis zu 0,1 Ωm ergibt sich auch eine deutlich verbesserte Risszähigkeit des Materials des Gleitrings.

Bei üblichen Gleitringen aus keramischem Werkstoff, wie z.B. SiC, können nach einer gewissen Betriebsdauer Risse auftreten, welche häufig ausgehend von der Gleitfläche durch den gesamten Gleitring verlaufen. Derartige Schadensbilder können bei dem erfindungsgemäßen Gleitring mit einem Graphenanteil im Wesentlichen vermieden werden. Es hat sich herausgestellt, dass die Graphenteile ein Risswachstum eines Risses 8 durch das gesamte Bauteil unterbinden. Die Risse treten üblicherweise im Wesentlichen senkrecht zur Gleitfläche des Gleitrings auf und verlaufen dann in axialer Richtung X-X durch den gesamten Gleitring. Die Graphenteile, welche aus einer Vielzahl von zueinander parallelen einzelnen Graphenlagen bestehen, verlangsamen dabei die Rissdurchlaufgeschwindigkeit deutlich. Wenn ein Riss 8 auf ein aus einer Vielzahl von Graphenlagen bestehendes Graphenteil trifft, reißen die Graphenlagen nicht alle gleichzeitig, sondern einzeln. Dadurch wird eine Ausbreitungsgeschwindigkeit eines Risses 8 durch das Bauteil signifikant reduziert. Somit weist der erfindungsgemäße Gleitring eine deutlich längere Lebensdauer als die herkömmlichen Gleitringe auf. Die Rissbildung ist schematisch in Fig. 3 angedeutet.

Bei einem Gleitring aus reinem SiC würde sich der Riss entlang der Korngrenzen des keramischen Werkstoffs durch das gesamte Bauteil in kürzester Zeit ziehen.

Wie weiter aus Fig. 2 ersichtlich ist, sind einige Graphenteile derart im Gleitring angeordnet, dass diese zumindest teilweise an der Oberfläche der Gleitfläche 30 freiliegen. Hierdurch ergeben sich weitere Vorteile hinsichtlich einer verminderten Reibzahl, insbesondere bei einem Trockenlauf der Gleitringdichtungsanordnung. Hierbei werden vermutlich bei einem Trockenlauf kleine Teilstücke der Graphenteile abgerissen und bilden eine Art Gleitmittel. Somit kann auch eine verbesserte Trockenlaufeigenschaft einer derartigen Gleitringdichtungsanordnung erreicht werden. Besonders bevorzugt ist dabei sowohl der stationäre Gleitring 3 als auch der rotierende Gleitring 2 aus dem erfindungsgemäßen Material, umfassend einen keramischen Werkstoff 5 und graphenhaltiges Material 6, hergestellt.

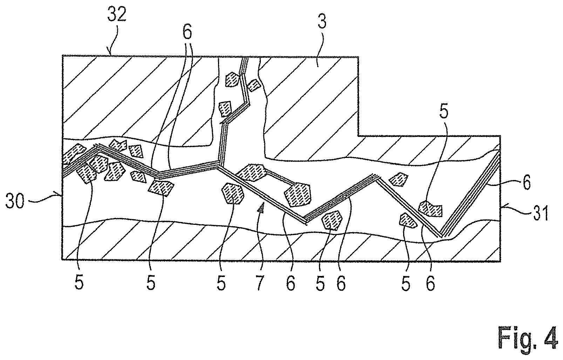

Fig. 4 zeigt einen Gleitring 3 in einer Gleitringdichtungsanordnung gemäß einem zweiten Ausführungsbeispiel der Erfindung. Im Unterschied zum ersten Ausführungsbeispiel ist beim zweiten Ausführungsbeispiel eine Anordnung des graphenhaltigen Materials 6 derart, dass einzelne Graphenteile eine kontinuierliche Verbindung durch den Gleitring von der Gleitfläche 30 zu einer Rückseite 31 und zu weiteren Außenseiten des Gleitrings bilden. Beispielhaft ist in Fig. 4 noch eine durchgehende Graphenverbindung zu einer radialen Außenseite 32 dargestellt. Einander benachbarte Graphenteile berühren sich und sind dabei jeweils in unterschiedlichen Winkeln zueinander angeordnet. Besonders bevorzugt ist die kontinuierliche Verbindung von der Gleitfläche 30 zur Rückseite 31 bzw. den Aussenseiten dabei als netzartige Struktur 7 ausgebildet. Somit ergeben sich viele direkte Verbindungswege über verschiedenste netzartig angeordnete Graphenteile von der Gleitfläche 30 zur Rückseite 31 bzw. weiteren Außenseiten. Dadurch kann insbesondere die elektrische Leitfähigkeit des Gleitrings 3 signifikant verbessert werden. Der Grund hierfür liegt darin, dass das Graphen eine deutlich höhere elektrische Leitfähigkeit als das keramische Material, z.B. SiC, aufweist. Die verbesserte elektrische Leitfähigkeit kann dabei gezielt in Verbindung mit einem Stromkreis über den Gleitring verwendet werden oder auch zum Abbau von elektrostatischen Ladungen an der Gleitfläche 30 verwendet werden.

### Bezugszeichenliste:

- 1: Gleitringdichtungsanordnung
- 2: rotierender Gleitring
- 3: stationärer Gleitring
- 4: Dichtspalt
- 5: keramischer Werkstoff
- 6: graphenhaltiges Material
- 7: Graphennetz
- 8: Riss
- 9: Mitnehmerelement
- 10: rotierendes Bauteil
- 11: Gehäuse
- 12, 13: Dichtringe
- 20: Produktbereich
- 21: Atmosphärenbereich
- 30: Gleitfläche
- 31: Rückseite
- X-X: Axialrichtung

## Patentansprüche

1. Gleitringdichtungsanordnung mit einem rotierenden Gleitring (2) und einem stationären Gleitring (3), wobei wenigstens einer der Gleitringe ein Gleitring, umfassend ein graphenhaltiges Material (6), ist,
- wobei das Material des Gleitringes ein Verbundwerkstoff, umfassend einen keramischen Werkstoff (5) und das graphenhaltige Material (6) ist, und
- wobei der Gleitring ausschließlich den keramischen Werkstoff (5) und das graphenhaltige Material (6) umfasst.

2. Gleitringdichtungsanordnung nach Anspruch 1, **dadurch gekennzeichnet, dass** das graphenhaltige Material (6) Graphen in Form von reinem Graphen und/oder Graphenoxid und/oder technisch reduziertem Graphenoxid und/oder funktionalem Graphen umfasst.

3. Gleitringdichtungsanordnung nach Anspruch 1, wobei im Verbundwerkstoff der keramische Werkstoff (5) und das graphenhaltige Material (6) vermischt sind.

4. Gleitringdichtungsanordnung nach einem der vorhergehenden Ansprüche, **dadurch gekennzeichnet, dass** der keramische Werkstoff (5) und das graphenhaltige Material (6) im Gleitring gleich verteilt sind.

5. Gleitringdichtungsanordnung nach einem der vorhergehenden Ansprüche, wobei der Gleitring ein Sinterbauteil ist.

6. Gleitringdichtungsanordnung nach einem der vorhergehenden Ansprüche, wobei ein Gewichtsanteil des graphenhaltigen Materials (6) am Gesamtgewicht des Gleitrings in einem Bereich von 0,1 bis 10 Gew.%, insbesondere 1 bis 5 Gew.% liegt.

7. Gleitringdichtungsanordnung nach einem der vorhergehenden Ansprüche, wobei der Gleitring einen spezifischen elektrischen Widerstand in einem Bereich von 0,1 bis 10 Ωm aufweist.

8. Gleitringdichtungsanordnung nach einem der vorhergehenden Ansprüche, wobei das graphenhaltige Material (6) des Gleitrings in Form von Graphenteilen derart verteilt ist, dass jedes Graphenteil eine Vielzahl von einzelnen Graphenlagen umfasst, welche unmittelbar parallel zueinander angeordnet sind.

9. Gleitringdichtungsanordnung nach einem der vorhergehenden Ansprüche, **dadurch gekennzeichnet, dass** der keramische Werkstoff (5) einzelne Graphenbestandteile vollständig umschließt.

10. Gleitringdichtungsanordnung nach einem der Ansprüche 1-8, wobei der Gleitring eine Gleitfläche (30) und eine Außenseite (31) aufweist und wobei zwischen der Gleitfläche (30) und der Außenseite (31) eine aus graphenhaltigem Material aufgebaute, durchgehende Verbindung ausgebildet ist.

11. Gleitringdichtungsanordnung nach Anspruch 10, **dadurch gekennzeichnet, dass** die Verbindung durch ein Graphennetz (7) aus Graphenteilen im Gleitring gebildet ist.

12. Gleitringdichtungsanordnung nach einem der Ansprüche 1-3 und 5-11, wobei graphenhaltiges Material (6) an einer Gleitfläche (30) des Gleitrings angeordnet ist.

13. Gleitringdichtungsanordnung nach einem der vorhergehenden Ansprüche, wobei der Gleitring an der Gleitfläche (31) eine Diamantbeschichtung aufweist.

14. Gleitringdichtungsanordnung nach einem der vorhergehenden Ansprüche, **dadurch gekennzeichnet, dass** der keramische Werkstoff SiC oder WC oder Siliziumnitrid ist.

## Claims

1. Mechanical seal arrangement having a rotating slide ring (2) and a stationary slide ring (3), wherein at least one of the slide rings is a slide ring comprising a graphene-containing material (6),
- wherein the material of the slide ring is a composite material comprising a ceramic material (5) and the graphene-containing material (6), and
- wherein the slide ring comprises exclusively the ceramic material (5) and the graphene-containing material (6).

2. Mechanical seal arrangement according to claim 1, **characterized in that** the graphene-containing material (6) comprises graphene in the form of pure graphene and/or graphene oxide and/or functional graphene.

3. Mechanical seal arrangement according to claim 1, wherein the ceramic material (5) and the graphene-containing material (6) are mixed in the composite material.

4. Mechanical seal arrangement according to any one of the preceding claims, **characterized in that** the ceramic material (5) and the graphene-containing material (6) are evenly distributed in the slide ring.

5. Mechanical seal arrangement according any to one of the preceding claims, wherein the slide ring is a sintered component.

6. Mechanical seal arrangement according to any one of the preceding claims, wherein a weight proportion of the graphene-containing material (6) of the total weight of the slide ring is in a range of 0.1 to 10 wt. %, in particular 1 to 5 wt.%.

7. Mechanical seal arrangement according to any one of the preceding claims, wherein the slide ring has a specific electrical resistance in a range of 0.1 to 10Ωm.

8. Mechanical seal arrangement according to any one of the preceding claims, wherein the graphene-containing material (6) of the slide ring is distributed in the form pf graphene parts such that each graphene part comprises a plurality of individual graphene layers which are arranged directly in parallel with one another.

9. Mechanical seal arrangement according to any one of the preceding claims, **characterized in that** the ceramic material (5) completely surrounds individual graphene constituents.

10. Mechanical seal arrangement according to any one of the claims 1-8, wherein the slide ring has a slide surface (30) and an outer side (31) and wherein a continuous connection established from graphene-containing material is formed between the slide surface (30) and the outer side (31).

11. Mechanical seal arrangement according to claim 10, **characterized in that** the connection is formed by a graphene network (7) consisting of graphene parts in the slide ring.

12. Mechanical seal arrangement according to any one of the claims 1-3 and 5-11, wherein graphene-containing material (6) is arranged on a slide surface (30) of the slide ring.

13. Mechanical seal arrangement according to any one of the preceding claims, wherein the slide ring has a diamond coating on the slide surface (31).

14. Mechanical seal arrangement according to any one of the preceding claims, **characterized in that** the ceramic material is SiC or WC or silicon nitride.

## Revendications

1. Ensemble formant une garniture mécanique d'étanchéité avec une bague de glissement rotative (2) et une bague de glissement stationnaire (3), dans lequel au moins une des bagues de glissement est une bague de glissement comprenant un matériau contenant du graphène (6),
- dans lequel le matériau de la bague de glissement est un matériau composite comprenant un matériau céramique (5) et le matériau contenant du graphène (6), et
- dans lequel la bague de glissement comprend exclusivement le matériau céramique (5) et le matériau contenant du graphène (6).

2. Ensemble formant une garniture mécanique d'étanchéité selon la revendication 1, **caractérisé en ce que** le matériau contenant du graphène (6) comprend du graphène sous la forme d'un graphène pur et/ou d'un oxyde de graphène et/ou d'un oxyde de graphène techniquement réduit et/ou d'un graphène fonctionnel.

3. Ensemble formant une garniture mécanique d'étanchéité selon la revendication 1, dans lequel le matériau céramique (5) et le matériau contenant du graphène (6) sont mélangés dans le matériau composite.

4. Ensemble formant une garniture mécanique d'étanchéité selon l'une quelconque des revendications précédentes, **caractérisé en ce que** le matériau céramique (5) et le matériau contenant du graphène (6) sont répartis de manière égale dans la bague de glissement.

5. Ensemble formant une garniture mécanique d'étanchéité selon l'une quelconque des revendications précédentes, dans lequel la bague de glissement est un composant de frittage.

6. Ensemble formant une garniture mécanique d'étanchéité selon l'une quelconque des revendications précédentes, dans lequel une part de poids du matériau contenant du graphène (6) se situe par rapport au poids total de la bague de glissement dans une plage allant de 0,1 à 10 % en poids, en particulier de 1 à 5 % en poids.

7. Ensemble formant une garniture mécanique d'étanchéité selon l'une quelconque des revendications précédentes, dans lequel la bague de glissement présente une résistance électrique spécifique située dans une plage allant de 0,1 à 10 Ωm.

8. Ensemble formant une garniture mécanique d'étanchéité selon l'une quelconque des revendications précédentes, dans lequel le matériau contenant du graphène (6) de la bague de glissement se présentant sous la forme de particules de graphène est réparti de telle manière que chaque particule de graphène comprend une pluralité de diverses couches de graphène, qui sont disposées de manière directement parallèle les unes par rapport aux autres.

9. Ensemble formant une garniture mécanique d'étanchéité selon l'une quelconque des revendications précédentes, **caractérisé en ce que** le matériau céramique (5) renferme complètement divers constituants de graphène.

10. Ensemble formant une garniture mécanique d'étanchéité selon l'une quelconque des revendications 1 - 8, dans lequel la bague de glissement présente une surface de glissement (30) et un côté extérieur (31) et dans lequel une liaison continue fabriquée à partir d'un matériau contenant du graphène est réalisée entre la surface de glissement (30) et le côté extérieur (31).

11. Ensemble formant une garniture mécanique d'étanchéité selon la revendication 10, **caractérisé en ce que** la liaison est formée par un réseau de graphène (7) composé de particules de graphène dans la bague de glissement.

12. Ensemble formant une garniture mécanique d'étanchéité selon l'une quelconque des revendications 1 - 3 et 5 - 11, dans lequel du matériau contenant du graphène (6) est disposé au niveau d'une surface de glissement (30) de la bague de glissement.

13. Ensemble formant une garniture mécanique d'étanchéité selon l'une quelconque des revendications précédentes, dans lequel la bague de glissement présente au niveau de la surface de glissement (31) un revêtement en diamant.

14. Ensemble formant une garniture mécanique d'étanchéité selon l'une quelconque des revendications précédentes, **caractérisé en ce que** le matériau céramique est du SiC (carbure de silicium) ou du WC (carbure de tungstène) ou du nitrure de silicium.
